(19) Europäisches Patentamt
European Patent Office
Office européen des brevets

(11) EP 3 569 645 A1

(12) EUROPEAN PATENT APPLICATION

(43) Date of publication:
**20.11.2019 Bulletin 2019/47**

(51) Int Cl.:
***C08J 5/04*** *(2006.01)*

(21) Application number: **18173363.5**

(22) Date of filing: **18.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **LEENDERS, Chiel Albertus**
**4612 PX Bergen op Zoom (NL)**
- **GROOTE, Ramon**
**4612 PX Bergen op Zoom (NL)**
- **GOOSSENS, Johannes Gerardus Petrus**
**4612 PX Bergen op Zoom (NL)**
- **VERGHESE, Nikhil**
**6160 AH Geleen (NL)**
- **KAMPS, Jan Henk**
**4612 PX Bergen op Zoom (NL)**

(74) Representative: **Balder IP Law, S.L.**
**Paseo de la Castellana 93**
**5ª planta**
**28046 Madrid (ES)**

# (54) REINFORCED DYNAMICALLY CROSSLINKED POLYESTER NETWORK

(57) In an embodiment, a fiber reinforced composite can comprise a dynamically crosslinked polymer network comprising a polyester matrix and a plurality of crosslinks; a transesterification catalyst; and a fabric layer. A method of making the composite can comprise coating the fabric layer with a composition comprising a pre-crosslinked polymer composition to form a coated fabric; and melt impregnating the coated fabric with the pre-crosslinked polymer composition to form a pre-impregnated composite; and curing the pre-crosslinked polymer composition to form the dynamically crosslinked polymer network.

EP 3 569 645 A1

## Description

### BACKGROUND

A dynamically crosslinked polymer network, often referred to as DCN, is a covalently crosslinked polymer network whose crosslinks can dynamically rearrange. As used herein, the term "crosslink" refers to the formation of a covalent bond between two polymers. This term is intended to encompass the covalent bonds that result in network formation. At low temperatures, the dynamically crosslinked polymer network behaves like a classic thermoset as the rate of the exchange reaction is slow. As the temperature increases, for example, to a temperature up to 320 degrees Celsius (°C), or 150 to 270°C, the rate of the exchange reaction increases such that the crosslinks appear to have a dynamic mobility at such rates that flow-like behavior is observed, ultimately allowing the material to be processed and re-processed as desired. The network is therefore capable of reorganizing itself without altering the number of crosslinks between its polymer chains. Put another way, the dynamically crosslinked polymer network can be heated to temperatures such that they become liquid-like without suffering destruction or degradation of their crosslinked structure. The viscosity of these materials varies slowly over a broad temperature range, with behavior that approaches the Arrhenius law. The crosslinks are capable of rearranging themselves via bond exchange reactions between multiple cross-links and/or chain segments as described, for example, by Kloxin and Bowman, Chem. Soc. Rev. 2013, 42, 7161-7173. Examples of dynamically crosslinked polymer compositions are described herein, as well as in U.S. Patent Application No. 2011/0319524, U.S. Patent Application No. 2017/0218192, WO 2012/152859; WO 2014/086974; D. Montamal et al., Science 334 (2011) 965-968; and J. P. Brutman et al, ACS Macro Lett. 2014, 3, 607-610.

Examining the nature of a given polymer composition can distinguish whether the composition is conventionally crosslinked, reversibly crosslinked, dynamically crosslinked, or non-crosslinked. A dynamically crosslinked network typically remains crosslinked at all times, provided the chemical equilibrium allowing crosslinking is maintained. In contrast, a reversibly crosslinked network however shows network dissociation upon heating, reversibly transforming to a low viscous liquid and then reforming the crosslinked network upon cooling. Reversibly crosslinked compositions also tend to dissociate in solvents, particularly polar solvents, while dynamically crosslinked compositions tend to swell in solvents as do conventionally crosslinked compositions. Examples of how to distinguish a dynamically crosslinked network can be found in WO2018055604 and WO2018055603.

There remains a need in the art for dynamically crosslinked polymer networks with improved mechanical properties at low temperature and efficient methods of preparing the same.

### BRIEF SUMMARY

Disclosed herein is a reinforced dynamically crosslinked polyester network and methods of making the same.

In an embodiment, a fiber reinforced composite can comprise a dynamically crosslinked polymer network comprising a polyester matrix and a plurality of crosslinks; a transesterification catalyst; and a fabric layer.

A method of making the composite can comprise coating the fabric layer with a composition comprising a pre-crosslinked polymer composition to form a coated fabric; and melt impregnating the coated fabric with the pre-crosslinked polymer composition to form a pre-impregnated composite; and curing the pre-crosslinked polymer composition to form the dynamically crosslinked polymer network.

An article can comprise the composite.

The above described and other features are exemplified by the following figures, detailed description, and claims.

### BRIEF DESCRIPTION OF THE DRAWINGS

The following figures are exemplary embodiments, which are provided to illustrate the present disclosure. The figures are illustrative and are not intended to limit devices made in accordance with the disclosure to the materials, conditions, or process parameters set forth herein.

FIG. 1 is an illustration of an embodiment of a composite;
FIG. 2 is an illustration of an embodiment of a powder coating station;
FIG. 3 is an illustration of an embodiment of a method of making a pre-preg;
FIG. 4 is a photograph of a melt impregnated fabric; and
FIG. 5 is a photograph of a composite.

### DETAILED DESCRIPTION

Fiber reinforced composites can be produced by using fibers that are milled, chopped, woven, or continuous

by combining them with a suitable or desired polymer matrix resin of choice. The fibers primarily serve as the load bearing structural components with the surrounding polymer matrix holding the fibers together and transferring load between the fibers. The compatibility between the fiber and the polymer matrix can have a dramatic effect on how well the load transfers from one fiber to another. It was discovered that a fiber reinforced composite (also referred to herein as the composite) comprising a dynamically crosslinked polymer network of a polyester matrix and a plurality of epoxy derived crosslinks; a transesterification catalyst; and a fabric layer resulted in a composite that was both capable of comprising an increased amount of glass fibers as well as having an unexpected improvement in mechanical properties. For example, Table 2 in the example section shows that the dynamically crosslinked polyester network comprising a glass fabric demonstrates increases of more than 100% in the flexural strength, the strain a max stress, and shear strength relative to the same composite but that is free of the dynamic crosslinks. This increase is further surprising as dynamically crosslinked network polyesters comprising a plurality of chopped glass fibers (as opposed to the continuous glass fibers present in the fabric), can only be successfully formed by conventional methods having concentrations of at most 40 weight percent (wt%), more realistically, of at most 35 wt%; and such a composite comprising the dynamically crosslinked network and 30 wt% of a plurality of chopped glass fibers achieves a flexural modulus of only 8.88 gigapascal (GPa) and a flexural strength of only 91 megapascal (MPa).

FIG. 1 is an illustration of an embodiment of composite 2. Composite 2 comprises dynamically crosslinked polymer network 6 located on both sides of fabric layer 4. The dynamically crosslinked polymer network can also be located in interstitial spaces between fibers of the fabric layer.

The polyester matrix can comprise a polyester having repeating ester units of the formula (4)

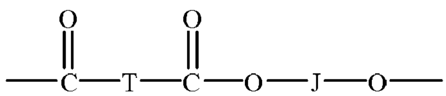

(4)

wherein J is a divalent group derived from a dihydroxy compound (which includes a reactive derivative thereof), and can be, for example, a $C_{2-10}$ alkylene, a $C_{6-20}$ cycloalkylene, a $C_{6-20}$ arylene, or a polyoxyalkylene group in which the alkylene groups contain 2 to 6 carbon atoms, or 2, 3, or 4 carbon atoms; and T is a divalent group derived from a dicarboxylic acid (which includes a reactive derivative thereof), and can be, for example, a $C_{2-20}$ alkylene, a $C_{6-20}$ cycloalkylene, or a $C_{6-20}$ arylene. Copolyesters containing a combination of different T or J groups can be used. The polyester units can be branched or linear. The polyester can have a degree of polymerization, n, of as high as 1,000, or 100 to 1,000. The polyester can have a weight average molecular weight of up to 100,000 grams per mole (g/mol) based on polystyrene standards.

The dihydroxy compound can comprise at least one of aromatic dihydroxy compounds of formula (2) (e.g., resorcinol), bisphenols of formula (3) (e.g., bisphenol A), a $C_{1-8}$ aliphatic diol such as ethane diol, n-propane diol, i-propane diol, 1,4-butane diol, 1,6-cyclohexane diol, or 1,6-hydroxymethylcyclohexane. Aliphatic dicarboxylic acids that can be used include at least one of a $C_{6-20}$ aliphatic dicarboxylic acid (which includes the terminal carboxyl groups) (for example, a linear $C_{8-12}$ aliphatic dicarboxylic acid such as decanedioic acid (sebacic acid)); or an alpha, omega-$C_{12}$ dicarboxylic acid (for example, dodecanedioic acid (DDDA)). Aromatic dicarboxylic acids that can be used include at least one of terephthalic acid, isophthalic acid, naphthalene dicarboxylic acid, or 1,6-cyclohexane dicarboxylic acid. A combination of isophthalic acid and terephthalic acid wherein the weight ratio of isophthalic acid to terephthalic acid is 91:9 to 2:98 can be used.

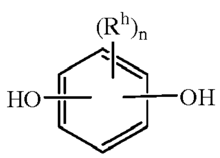

(2)

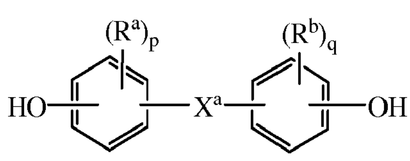

(3)

In formula (2) each $R^h$ is independently a halogen atom, for example bromine, a $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4. In formula (3) $R^a$ and $R^b$ are each independently a halogen, $C_{1-12}$ alkoxy, or $C_{1-12}$ alkyl, and p and q are each independently integers of 0 to 4, such that when p or q is less than 4, the valence of each carbon of the ring is filled by hydrogen.

Specific ester units include ethylene terephthalate units, n-propylene terephthalate units, n-butylene terephthalate units, ester units derived from isophthalic acid, terephthalic acid, and resorcinol (ITR ester units), and ester units derived from sebacic acid and bisphenol A.

The polyester can comprise at least one of an aliphatic polyester, a polyalkylene terephthalate (for example,

poly(butylene terephthalate), poly(propylene terephthalate), or poly(ethylene terephthalate)), a poly(cyclohexylene dimethylene terephthalate), or a poly(alkylene naphthalate).

The polyester can comprise a polybutylene terephthalate as shown in formula (1a).

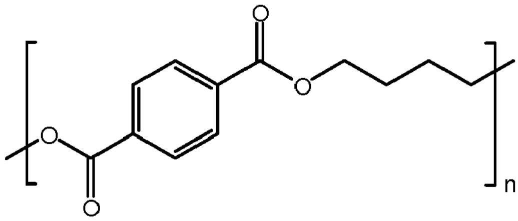

(1a)

The polyester can comprise a polyethylene terephthalate as shown in formula (1b).

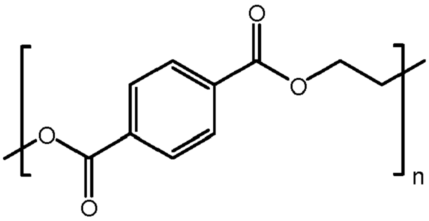

(1b)

The polyester can comprise a poly(cyclohexylene dimethylene terephthalate) (PCTG) as shown in formula (1c), where p is the molar percentage of repeating units derived from CHDM. For example, the polyester can comprise a copolymer formed from 1,4-cyclohexanedimethanol (CHDM), ethylene glycol, and terephthalic acid. The two diols react with the diacid to form a copolyester.

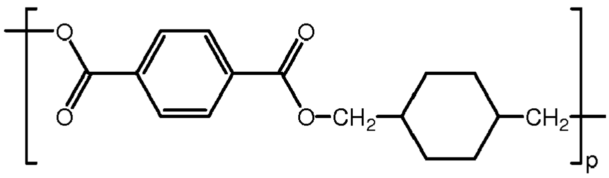

(1c)

The polyester can comprise poly(ethylene naphthalate), also known as PEN, as shown in formula (1d).

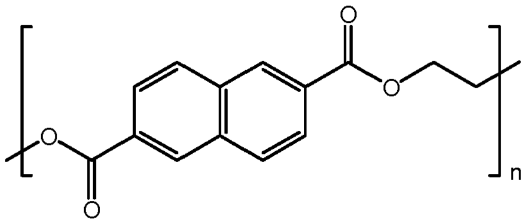

(1d)

The polyester can comprise a copolyestercarbonates having both ester linages and carbonate linkages. The carbonate linkages are shown in formula (I)

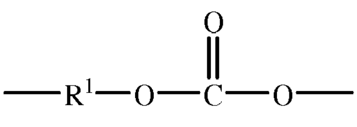

(I)

wherein $R^1$ is a divalent radical that can be derived from a dihydroxy compound. Examples of dihydroxy compounds include aromatic dihydroxy compounds of formula (2) (e.g., resorcinol) or bisphenols of formula (3) (e.g., bisphenol A).

The coupler component functions as a crosslinker and can also function as chain extender. The coupler component can exhibit reactivity with one or more end groups of a given chemical structure of the polyester. As an example, the coupler component can react with at least one of a carboxylic acid group or a hydroxyl (-OH) group of the polyester, one or both of which can be end groups. The coupler component can include at least two, or 2 to 20, or 2 to 6 reactive moieties. The reactive moieties can comprise at least one of an epoxy moiety, an anhydride moiety, or a hydroxyl moiety. The coupler component can comprise at least two epoxy moieties. The coupler component can comprise at least one of a monomer, an oligomer, or a polymer. As used herein, the terms moiety and group are the same, but in general, the term moiety is used when referring to the reactive portion of the coupler component and the term group is used when referring to the reactive portion of the polyester.

The coupler component can comprise at least two reactive moieties, at least one of which is an epoxy moiety (also referred to herein as an epoxy crosslinker). For example, the epoxy crosslinker can comprise at least one hydroxyl moiety and at least one epoxy moiety. The epoxy crosslinker can comprise 2 to 6, or 3 to 5 epoxy moieties. The epoxy moiety of a coupler component can generate a primary alcohol that can directly react with a carboxylic acid end group of the polyester in the presence of a catalyst. An exemplary epoxy moiety is shown in formula (D)

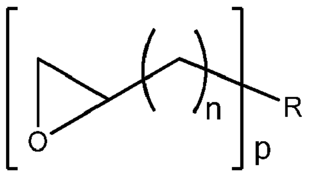

(D)

wherein n is greater than or equal to 1, and R can be a chemical group (including, but not limited to, ether, ester, phenyl, alkyl, alkynyl, etc.), and p is greater than or equal to 2 such that there are at least 2 of the epoxy moieties present. Bisphenol A diglycidyl ether (BADGE) is an exemplary epoxy crosslinker where R is bisphenol A, n is 1, and p is 2. The epoxy crosslinker can have an epoxide equivalent weight of 200 and 300, or 200 to 600, or 475 to 550 grams/equivalent as determined in accordance with ASTM D-1652.

The epoxy crosslinker can comprise at least one of an epoxidized 1,1,1-tris(4-hydroxyphenyl)ethane, an epoxidized 1,1,2,2,-tetra(4-hydroxyphenyl)ethane, an epoxidized phenol-formaldehyde novolac, an epoxidized cresol-formaldehyde novolac, an epoxidized alkylphenol-formaldehyde novolac, an epoxidized phenol-dicyclopentadiene novolac, or an epoxidized phenol-benzaldehyde novolac.

The epoxy crosslinker can comprise a glycidyl epoxy resin such as the glycidyl epoxy ether as shown in formula (A). The value of n can be 0 to 25 in formula (A). Depending on the number of repeat units, n, the glycidyl epoxy ether can be considered a monomer (e.g. n=0), an oligomer (e.g. n=1 to 7), or a polymer (n=8 to 25). BADGE-based resins can have at least one of excellent electrical properties, low shrinkage, good adhesion to numerous metals, good moisture resistance, good heat resistance, or good resistance to mechanical impacts. BADGE oligomers (where n=1 or 2) are commercially available as D.E.R.™ 671 from Dow. The glycidyl epoxy ether can have at least one of an epoxide equivalent weight of 475 to 550 grams/equivalent as determined in accordance with ASTM D-1652, an epoxide percentage of 7 to 10% as determined in accordance with ASTM D-1652, an epoxide group content of 1800 to 2500 millimoles of epoxide/kilogram as determined in accordance with ASTM D-1652, a melt viscosity at 150°C of 400 to 950 millipascal seconds (mPa·sec), and a softening point of 75 to 85°C.

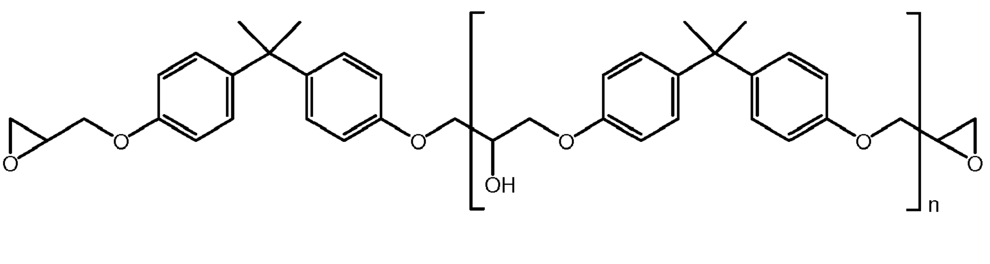

(A)

The epoxy crosslinker can comprise a multifunctional glycidylester crosslinker such as ARALDITE™ PT 910 commercially available from Huntsman Advanced Materials Inc.

The epoxy crosslinker can comprise a novolac resin. The novolac resin can be obtained by reacting phenol with formaldehyde in the presence of an acid catalyst to produce a novolac phenolic resin, followed by a reaction with epichlorohydrin in the presence of sodium hydroxide as catalyst. An example of a novolac resin is shown in formula (B)

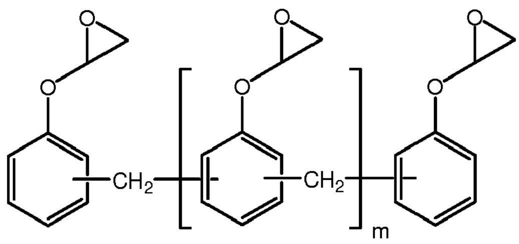

(B)

wherein m is 0 to 25.

The epoxy crosslinker can comprise a cycloaliphatic epoxy such as ERL of the formula (C).

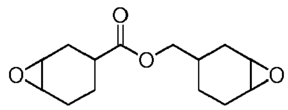

(C)

Other exemplary monomeric epoxy crosslinkers include diglycidyl benzenedicarboxylate as shown in formula (E) and triglycidyl benzene tricarboxylate as shown in formula (F).

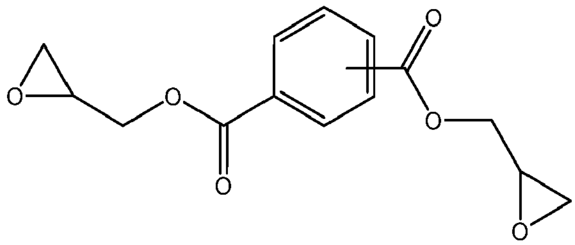

(E)

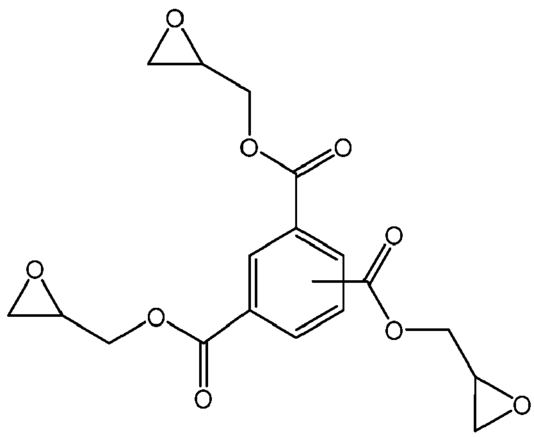

(F)

The epoxy crosslinker can comprise an epoxidized styrene-acrylic copolymer (CESA). CESA is a copolymer of styrene, methyl methacrylate, and glycidyl methacrylate as is shown in formula (G). The CESA copolymer can have at least one of a weight average molecular weight of 6,000 to 8,000 g/mol or an epoxy equivalent weight (weight in grams of resin containing 1 mol equivalent of epoxide) of 250 to 350 g/mol.

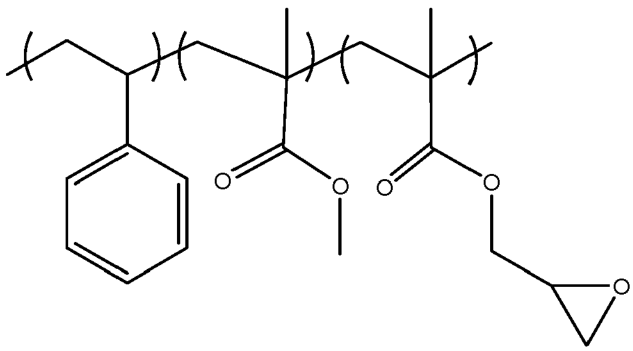

(G)

Optionally, instead of, or in addition to the epoxy derived crosslinks the coupler component can comprise at least one of anhydride and carboxylic acid moieties as such moieties can react with a hydroxyl group on the polyester. Such coupler components can comprise a dianhydride moiety, such as a monomeric dianhydride compound. In the presence of a suitable catalyst, the dianhydride can undergo ring opening, thereby generating carboxylic acid groups. The generated carboxylic acid moieties can undergo direct esterification with the hydroxyl end groups of the polyester. The monomeric dianhydride compound can comprise pyromellitic dianhydride as shown in formula (G).

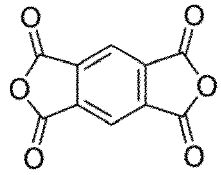

(G)

For the dynamically crosslinked polyester network, the following conditions are generally sufficient to obtain a three-dimensional network:

$$N_A < N_O + 2N_X$$

$$N_A > N_X$$

wherein $N_O$ denotes the number of moles of hydroxyl groups; $N_X$ denotes the number of moles of reactive epoxy groups; and $N_A$ denotes the number of moles of ester groups. For example, if the coupler component comprises at least two epoxy moieties, then the mole ratio of hydroxyl and epoxy moieties from the coupler component to the ester groups from the polyester can be 0.01:100 to 30:100, or 0.1:100 to 10:100, or 1:100 to 5:100. The polyester can be present in an amount of 50 to 99 wt%, or 80 to 96 wt%, or 85 to 95 wt% based on the total weight of the polyester and the coupler component. The coupler component can be present in an amount of 1 to 50 wt%, or 4 to 20 wt%, or 5 to 15 wt% based on the total weight of the polyester and the coupler component.

The fiber reinforced composite can comprise a transesterification catalyst. The transesterification catalyst can comprise at least one of a metal acetylacetonate, a tin compound (for example, dibutyltin laurate, tin octanoate, dibutyltin oxide, dioctyltin, dibutyldimethoxytin, tetraphenyltin, or a stannoxane (for example, tetrabutyl-2,3-dichlorodistannoxane)), benzyldimethylamide, benzyltrimethyl ammonium chloride, a metal acetate (for example, calcium acetate, zinc acetate, tin acetate, cobalt acetate, nickel acetate, lead acetate, lithium acetate, manganese acetate, sodium acetate, or cerium acetate), a metal salt of a saturated or unsaturated fatty acid (for example, zinc stearate), a metal oxide (for example, zinc oxide, antimony oxide, or indium oxide), a metal alkoxide (for example, titanium tetrabutoxide, titanium propoxide, titanium isopropoxide, titanium ethoxide, a zirconium alkoxide, a niobium alkoxide, a tantalum alkoxide, sodium methoxide, a potassium alkoxide, or a lithium alkoxide), a metal alcoholate (for example, sodium alcoholate), a sulfonic acid (for example, sulfuric acid, methane sulfonic acid, or para-toluene sulfonic acid), a phosphine (for example, triphenylphosphine, dimethylphenylphosphine, methyldiphenylphosphine, or tri-t-butylphosphine), an organic compound (for example, benzyldimethylamide or benzyltrimethyl ammonium chloride), or a phosphazene. Where present, the metal of each transesterification catalyst independently can comprise at least one of zinc, tin, magnesium, cobalt, calcium, titanium, or zirconium. The transesterification catalyst can comprise zinc(II)acetylacetonate.

The composite can comprise 0.01 to 25 mole percent (mol%), or 0.025 to 20 mol%, or 0.1 to 10 mol%, or 0.5 to 5 mol% of the transesterification catalyst, based on the total molar amount of ester moieties in the polyester matrix. The composite can comprise 0.01 to 1 wt%, or 0.1 to 0.5 wt%, of the transesterification catalyst, based on the total weight of the polyester, the coupler component, and the catalyst.

The fabric layer can comprise at least one of a woven fabric or a non-woven fabric. The fabric comprises a plurality of fibers. In the woven fabric, the fibers can be aligned and oriented in at least 1, or at least 2, or 1 to 6 main directions. For example, the fabric can be a unidirectional tape, wherein the fibers are aligned in 1 main direction. The fibers of the unidirectional tape can be adhered to one another, for example, via an adhesive or a coupling agent. Alternatively, the fibers can be oriented in two main directions oriented 90° relative to one another. The fibers can each independently have a length of greater than or equal to 1 centimeter (cm), or 1 cm to 20 meters (m), or 10 cm to 15 m, or 20 cm to 1 m. Such fibers can be considered as continuous fibers in contrast to a chopped fibers that generally have fiber lengths of 0.2 to 5 millimeters (mm). The composite can comprise 30 to 80 wt%, or 45 to 90 wt%, or 50 to 90 wt% of the fabric layer based on the total weight of the composite.

The fabric layer can comprise at least one of a plurality of glass fibers, a plurality of organic fibers, a plurality of ceramic fibers, or a plurality of metallic fibers.

The fabric can be a glass fiber fabric comprising a plurality of glass fibers. The glass fibers can be continuous glass fibers. The glass fiber fabric can comprise at least one a woven glass fiber fabric or non-woven glass fiber fabric, where the fibers are each independently E-, NE-, S-, T-, or D-type glasses or quartz. The plurality of glass fibers can comprise at least one of hollow glass fibers or solid glass fibers. The glass fabric can be treated with a coupling agent, for example, with at least one of a silane-, a titanate-, a zirconate-, an aluminum-, or a zircoaluminum-based coupling agent in order to improve adhesion with the dynamically crosslinked network.

The organic fibers can comprise poly(ether ketone) fibers, polyimide benzoxazole fibers, poly(phenylene sulfide) fibers, polyester fibers, aromatic polyamide fibers, aromatic polyimides fibers, polyetherimides fibers, acrylic resin fibers, fluoropolymer fibers, or poly(vinyl alcohol) fibers. The organic fibers can comprise natural organic fibers, for example, cotton, hemp, felt, carbon fiber, or natural cellulosic fabrics (for example, Kraft paper).

The composite can comprise an additive. The additive can comprise at least one of an antioxidant, a plasticizer, a lubricant, a mold release agent, an ultraviolet resistant agent, a heat stabilizer, an antistatic agent, an anti-microbial agent, an anti-drip agent, a radiation stabilizer, a pigment, a dye, a filler, a plasticizer, a flame retardant, a nucleating agent, an impact modifier, or a clarifying agent.

The composite can comprise an additional polymer. The additional polymer can comprise at least one of an acrylic polymer, an acrylic-styrene-acrylonitrile (ASA) resin, an acrylonitrile-butadiene-styrene (ABS) resin, an ethylene-tetrafluoroethylene copolymer, an ethylene-vinyl acetate copolymer, a liquid crystal polymer, a poly(alkenyl aromatic) polymer, a polyacetal, a polyacrylonitrile, a polyamide, a polyamideimide, a polybutadiene, a polycarbonate (for example, a bisphenol A homopolycarbonate, a polycarbonate copolymer, a tetrabromo-bisphenol A polycarbonate copolymer, or a polysiloxane-co-bisphenol-A polycarbonate), a polyether, a polyetherimide, a polyether ketone, a polyether ether ketone, a polyethersulfone, a polyimide, a polylactic acid (PLA), a polylactide, a polyolefin, a polyphenylene ether, a polyphenylene sulfide, a polyphenylsulfone, a polysiloxane, a polystyrene, a polysulfone, polytetrafluoroethylene a polyurethane, a polyvinyl acetate, a polyvinyl fluoride, a polyvinylidene chloride, or a polyvinylidene fluoride.

The composite can comprise 10 to 70 wt%, or 20 to 55 wt%, or 10 to 50 wt%, or 25 to 50 wt%, or 30 to 40 wt% of the dynamically crosslinked polymer network based on the total weight of the composite. The composite can comprise 30 to 90 wt%, or 45 to 80 wt%, or 50 to 90 wt%, or 50 to 75 wt%, or 60 to 70 wt% of the fabric based on the total weight of the composite.

The method of making the composite can comprise coating the fabric with a composition comprising a pre-crosslinked polymer composition to form a coated fabric; melt impregnating the coated fabric with the pre-crosslinked polymer composition to form a pre-impregnated composite (referred to herein as a pre-preg); and curing the pre-crosslinked polymer composition at a temperature of 50 to 250°C to form the composite comprising the dynamically crosslinked polymer network. The pre-crosslinked polymer composition refers to a composition comprising the polyester, the coupler component, and the transesterification catalyst, where the polyester and the coupler component have not reacted sufficiently to establish a crosslinked network. The pre-crosslinked polymer composition can comprise 0 to 3 wt%, or 0.01 to 1 wt% of water, based on the weight of the pre-dynamic cross-linked polymer composition.

The coating can comprise at least one of scattering, spray coating, dip coating, flood coating, or aqueous impregnation. The coating can comprise dispensing the powder comprising the pre-crosslinked polymer composition onto a roller comprising a plurality of protrusions; rotating the roller, and allowing the powder to fall onto the fabric layer. At least one of the roller and the fabric layer can be translated during the dispensing to form an even coating. The coating can be performed in a vacuum or in an inert environment.

FIG. 2 is an illustration of an embodiment of a method scattering a powder comprising the pre-crosslinked polymer composition on a fabric via coating station 50. FIG. 2 illustrates that the pre-crosslinked polymer composition is dispensed from hopper 32 onto roller 52. Roller 52 comprises a plurality of protrusions that help to guide the pre-crosslinked polymer composition onto fabric layer 22 to form coated fabric 24. Over fill component 54 (for example, a doctor blade) can be present to remove any excess powder prior to depositing onto fabric layer 22. Brush 56 can be present to remove any undeposited powder remaining on roller 52, depositing the remaining powder onto coated fabric layer 24. The fabric layer can be translated during the coating, for example, via belt 58. Conversely or in addition to, coating station 50 can be translated during coating.

After the coating, the coated fabric can be melt impregnated with the pre-crosslinked polymer composition. This step can allow for at least one of the pre-crosslinked polymer composition to at least partially crosslink or to at least partially impregnate the fabric layer. The melt impregnating can comprise heating the coated fabric for an amount of time and at a temperature high enough to melt impregnate at least a portion of the coated fabric. For example, the melt impregnating can occur for an impregnation time of less than or equal to 15 minutes (min), or 10 seconds (sec) to 7 min, or 30 sec to 10 min, or 1 to 3 min, or 1 to 2 min. The melt impregnating can occur at an impregnation temperature of 40 to 320°C, or 70 to 300°C, or 100 to 200°C. The melt impregnating can be performed in a vacuum or in an inert environment.

The melt impregnating can comprise translating the fabric layer from a first roll, through a coating station to form the coated fabric, then through a melt impregnation station to form the pre-crosslinked polymer composition, and optionally onto a second roll. The melt impregnation station can comprise a heating section and a cooling section. The heating section can heat the coated fabric to the impregnation temperature for the desired impregnation time. After the melt impregnating, the coated fabric can enter the cooling station to halt the crosslinking reaction and form the pre-preg. The melt impregnating can be performed in a vacuum or in an inert environment. The fabric layer can be supported on a carrier layer during the translating.

An example of a method of forming the pre-preg is illustrated in FIG. 3. FIG. 3 shows that the fabric layer can be wound on first roller 20 and first roller 20 can be rotated in a clockwise direction to unroll the fabric layer. The fabric layer can pass through coating station 50 where a powder comprising the pre-crosslinked polymer composition is scattered onto the fabric layer forming a coated fabric. The coated fabric then enters double belt press 60 passing first through heating zone 62 where the pre-crosslinked polymer composition is melt impregnated into the fabric. After the pre-crosslinked polymer composition is melt impregnated, the fabric enters cooling zone 64 and is then would onto spooling roller 10. FIG. 3 also shows that carrier films 80 and 90 can be present. FIG. 4 is a photograph of a melt impregnated fabric that shows that the fabric is unevenly coated with some through-holes still present.

After the fabric is melt impregnated, the melt impregnated fabric can be cured to form the dynamically crosslinked polymer network. The curing can occur at a temperature to 50 to 250°C, or 100 to 200°C. FIG. 5 is a photograph of a composite that shows that the fabric is evenly coated with no through-holes present. The curing can comprise curing a layered stack of one or more, or 4 to 10 melt impregnated fabric layers. The respective layers of the layered stack can be randomly layered. The respective layers of the layered stack can be oriented, for example, the respective layers can be oriented in the same direction, for example, such that the fibers are at 0° and 90° with respect to each other. The respective layers of the layered stack can be oriented in the different directions, for example, such that the fibers from a first layer are at 0° and 90° with respect to each other, and the fibers from a second layer are at angles at 0° and 90° with respect to each other and at angles of +40° to +50°, and -40° to -50° with respect to the fibers of the first layer. The curing can comprise laminating. The curing can comprise thermoforming. The curing can comprise vacuum forming. The curing can comprise heating by at least one of conduction, convection, induction, spot heating, infrared, microwave, or radiant heating.

An article can comprise the composite. The articles formed from the dynamic cross-linked polymer compositions described herein, on account of their particular composition, can be transformed, repaired, or recycled by raising the temperature of the article.

The composite can have a flexural modulus of greater than or equal to 20 GPa, or greater than or equal to 22 GPa, or 20 to 25 GPa. The composite can have a flexural strength of greater than or equal to 200 MPa, or greater than or equal to 300 MPa, or greater than or equal to 400 MPa, or 200 to 550 MPa, or 450 to 500 MPa. The composite can have a strain at max stress of greater than or equal to 1.5% or greater than or equal to 2%, or 1.5 to 2.5%. The flexural properties can be determined in accordance with ASTM D7264-15, using a Zwick Z010, a support span of 48 millimeters (mm), a test speed of 2 millimeters per minute (mm/minute), and samples having dimensions of (L x W x H) 60$\pm$0.5 mm x 10.3$\pm$0.1 mm x 1.5$\pm$0.2 mm.

The composite can have a shear modulus of greater than or equal to 20 GPa, or greater than or equal to 12 GPa, or 12 to 15 GPa. The composite can have a shear strength of greater than or equal to 250 MPa, or greater than or equal to 400 MPa, or greater than or equal to 600 MPa, or 250 to 700 MPa, or 600 to 650 MPa. The composite can have a strain at max stress of greater than or equal to 3% or greater than or equal to 4%, or 3 to 5%. The shear properties can be determined in accordance with ASTM D2344-16 using a Zwick Z010, a support span of 20 mm, a test speed of 2 mm/minute, and samples having dimensions of (L x W x H) 30$\pm$0.5 mm x 10.3$\pm$0.1 mm x 1.5$\pm$0.2 mm.

The following examples are provided to illustrate the present disclosure. The examples are merely illustrative and are not intended to limit devices made in accordance with the disclosure to the materials, conditions, or process parameters set forth therein.

Examples

In the examples, the following components were used as detailed in Table 1.

Table 1

| Component | Description | Source |
|---|---|---|
| Poly(butylene terephthalate) | High flow Poly(butylene terephthalate) | Sabic's Innovative Plastics Business |
| Antioxidant | Antioxidant 1010 | BASF |
| Epoxy crosslinker | DER 671 | DOW Benelux B.V. |
| Catalyst | Zinc(II) acetylacetonate | Sigma-Aldrich |
| Glass fabric | Twill weave, 80 g/$m^2$ Code 190112-X | R&G Faserverbundwerkstoffe GmbH |

In the examples, the following test methods were used.

Flexural tests were conducted according to ASTM D7264-15. The test equipment used was a Zwick Z010, the support span was 48 mm, the speed was 2 mm/minute, the samples dimensions were (L x W x H) 60$\pm$0.5 mm x 10.3$\pm$0.1 mm x 1.5$\pm$0.2 mm. A total of 4 specimens per test were measured.

Short beam shear tests were conducted according to ASTM D2344-16. The test equipment was a Zwick Z010, the support span was 20 mm, the speed was 2 mm/minute, the samples dimensions were (L x W x H) 30$\pm$0.5 mm x 10.3$\pm$0.1 mm x 1.5$\pm$0.2 mm. A total of 5 specimen per test were measured.

The dripping and sagging behavior was tested by blowing hot air with a temperature higher than the melt point of the polymer onto ISO tensile bars to visually assess the relative drip and sag of the tensile bars.

Examples 1-4: Improvement of mechanical properties of composites comprising the dynamically crosslinked polyester network

Compounded pellets were prepared comprising an uncrosslinkable PBT and a pre-crosslinked PBT. The compounded pellets were milled to form a powder comprising particles having an average particle size of 250 micrometers. The respective powders were then powder scattered onto glass fabric via a powder coater as illustrated in FIG. 2. The powder coated glass fabric was subsequently passed through a Meyer double belt press, where the powder is molten and pressed into the fabric to from a composite pre-preg. Several sheets of pre-preg were layered upon each other such that the glass fiber direction was either perpendicular to each other (0°, 90°) or varied (0°, 90°, -45°, +45°) and laminated in a Laufer press at 250°C for 15 minutes to form the composites having a thickness of 1.5 mm. As can be seen in Table 2, Examples 1 and 3 comprise an uncrosslinked poly(butylene terephthalate) and Examples 2 and 4 comprise a dynamically crosslinked polyester network, whose compositions are described in Table 2, where the standard deviation are shown in parentheses. Columns 1-2 and 3-4 show the percent increase in the stated values from the uncrosslinked poly(butylene terephthalate) to the increased value of the dynamically crosslinked polyester network.

Table 2

| Example | 1 | 2 | 1-2 | 3 | 4 | 3-4 |
|---|---|---|---|---|---|---|
| Layering direction | (0°, 90°) | (0°, 90°) | | 0°, 90°, -45°, +45° | 0°, 90°, -45°, +45° | |
| PBT (wt%) | 34.965 | 33.145 | | 34.965 | 33.145 | |
| Antioxidant (wt%) | 0.035 | 0.035 | | 0.035 | 0.035 | |
| Epoxy crosslinker (wt%) | - | 1.75 | | - | 1.75 | |
| Catalyst (wt%) | - | 0.07 | | - | 0.07 | |
| Glass fabric (wt%) | 65 | 65 | | 65 | 65 | |
| Mechanical Testing, flexural properties | | | | | | |
| Flexural modulus (GPa) | 19.48 (0.74) | 22.71 (0.95) | 16.4 | 14.09 (0.45) | 17.11 (0.41) | 21.3 |
| Flexural strength (MPa) | 184.2 (32.28) | 463.7 (24.82) | 152.2 | 185.4 (12.72) | 428.1 (27.31) | 131.4 |
| Strain at max stress (%) | 1.0 (0.2) | 2.1 (0.1) | 110.0 | 1.4 (0.1) | 3.1 (0.1) | 121.4 |

(continued)

| Mechanical Testing, shear properties | | | | | | |
|---|---|---|---|---|---|---|
| Shear modulus (GPa) | 10.00 (0.43) | 13.14 (0.96) | 31.4 | - | - | - |
| Shear strength (MPa) | 206.8 (10.0) | 622.3 (17.4) | 200.9 | - | - | - |
| Strain at max stress (%) | 2.0 (0.2) | 4.7 (0.1) | 135 | - | - | - |

Table 2 shows the significant increase in all of the properties tested in the composites of Examples 2 and 4 relative the uncrosslinked versions of Examples 1 and 3, respectively.

As compared to a dynamically crosslinked network comprising a plurality of chopped glass fibers, it is first noted that concentrations of more than 40 wt%, more specifically, of more than 35 wt% are difficult or impossible to achieve. Further, a composite comprising a dynamically crosslinked network and 30 wt% of a plurality of chopped glass fibers achieves a flexural modulus of only 8.88 GPa and a flexural strength of only 91 MPa.

Example 5: Fatigue testing of composites

Fatigue testing was performed on five samples comprising the composition of Example 1 and on five samples comprising the composition of Example 2. The testing was performed using a fixed strain fatigue test on a Dynamic Bend & Torsion Card Tester, acquired from Q-Card, Sunbury, PA. The samples had dimensions of 86 mm x 10 mm x 0.8 mm. After 330,000 cycles all of the samples comprising the uncrosslinked composition of Example 1 broke, whereas all of the samples comprising the dynamically crosslinked polyester network remained unbroken.

Set forth below are various non-limiting aspects of the disclosure.

Aspect 1: A fiber reinforced composite comprising: a dynamically crosslinked polymer network comprising a polyester matrix and a plurality of epoxy derived crosslinks; a transesterification catalyst; and a fabric layer. Optionally, the epoxy derived crosslinks can be replaced with or can additionally comprise crosslinks derived from coupler components comprising at least one of anhydride and carboxylic acid moieties.

Aspect 2: The composite of Aspect 1, wherein the polyester matrix comprises at least one of an aliphatic polyester, a polyalkylene terephthalate (for example, poly(butylene terephthalate), poly(propylene terephthalate), or poly(ethylene terephthalate)), a poly(cyclohexylene dimethylene terephthalate), or a poly(alkylene naphthalate). Preferably the polyester matrix comprises the polybutylene terephthalate.

Aspect 3: The composite of any one or more of the preceding aspects, wherein the plurality of epoxy derived crosslinks are derived from at least one of a glycidyl ether comprising on average at least two epoxy groups or a novolac phenolic resin. Preferably, the glycidyl ether comprises bisphenol A diglycidyl ether.

Aspect 4: The composite of any one or more of the preceding aspects, wherein the transesterification catalyst comprises at least one of a metal acetylacetonate (preferably the metal comprises at least one of zinc, tin, magnesium, cobalt, calcium, titanium, or zirconium), dibutyltin laurate, tin octanoate, dibutyltin oxide, dioctyltin, dibutyldimethoxytin, tetraphenyltin, tetrabutyl-2,3 -dichlorodistannoxane, benzyldimethylamide, benzyltrimethyl ammonium chloride, a rare earth salt of an alkali metal, a rare earth salt of an alkaline earth metal, a salt of a saturated or unsaturated fatty acids and a metal, a metal oxide, a metal alkoxide, a metal alcoholate, a metal hydroxide, a sulfonic acid, a phosphine, or a phosphazene. Preferably, the transesterification catalyst comprises zinc(II)acetylacetonate. The metal in any of the aforementioned transesterification catalysts can comprise at least one of zinc, tin, magnesium, cobalt, calcium, titanium, or zirconium.

Aspect 5: The composite of any one or more of the preceding aspects, wherein the composite comprises 0.01 to 25 mol% of the transesterification catalyst, based on the total molar amount of ester moieties in the polyester matrix.

Aspect 6: The composite of any one or more of the preceding aspects, wherein the fabric layer comprises at least one of a woven fabric or a non-woven fabric; wherein the fabric layer optionally comprises a glass fabric. Preferably, the fabric layer comprises a woven glass fabric.

Aspect 7: The composite of any one or more of the preceding aspects, wherein the composite comprises 20 to 70 wt%, or 10 to 50 wt% of the dynamically crosslinked polymer network based on the total weight of the composite.

Aspect 8: The composite of any one or more of the preceding aspects, wherein the composite comprises 30 to 80 wt%, or 50 to 90 wt% of the fabric layer; based on the total weight of the composite.

Aspect 9: The composite of any one or more of the preceding aspects, wherein the dynamically crosslinked polymer network is derived from a pre-crosslinked polymer composition comprising an epoxy crosslinker, a polyester, and the transesterification catalyst.

Aspect 10: The composite of Aspect 9, wherein a mole ratio of the hydroxyl and epoxy groups from the epoxy crosslinker to the ester groups in the polyester is 0.01:100 to 30:100, or 0.1:100 to 10:100, or 1:100 to 5:100.

Aspect 11: A method of making the composite of any one or more of the preceding aspects, comprising coating the fabric layer with a composition comprising a pre-crosslinked polymer composition to form a coated fabric; and melt impregnating the coated fabric with the pre-crosslinked polymer composition to form a pre-impregnated composite; and curing the pre-crosslinked polymer composition to form the dynamically crosslinked polymer network.

Aspect 12: The method of Aspect 11, wherein the curing occurs at a temperature of 50 to 250°C.

Aspect 13: The method of any one of Aspects 11 to 12, wherein the coating comprises at least one of scattering, spray coating, dip coating, flood coating, or aqueous impregnation.

Aspect 14: The method of any one of Aspects 11 to 13, wherein the melt impregnating comprises translating the fabric layer from a first roll, through a coating station to form the coated fabric, then though a melt impregnation station to form the pre-crosslinked polymer composition, and ultimately onto a second roll.

Aspect 15: The method of any one of Aspects 11 to 14, wherein the coating comprises the scattering and the scattering comprises: dispensing a powder comprising the pre-crosslinked polymer composition onto a roller comprising a plurality of protrusions; rotating the roller and allowing the powder to fall onto the fabric layer; and translating at least one of the roller and the fabric layer in a lateral direction during the dispensing.

Aspect 16: The method of any one of Aspects 11 to 15, wherein the fabric layer is supported on a carrier layer during the translating.

Aspect 17: The method of any one of Aspects 11 to 16, wherein the curing comprises laminating.

Aspect 18: An article comprising the composite of any one of the preceding aspects.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

The terms "a" and "an" do not denote a limitation of quantity, but rather denote the presence of at least one of the referenced item. The term "or" means "and/or" unless clearly indicated otherwise by context. "Optional" or "optionally" means that the subsequently described event or circumstance may or may not occur, and that the description includes instances where the event occurs and instances where it does not. Reference throughout the specification to "an embodiment", "another embodiment", "some embodiments", "an aspect", and so forth, means that a particular element (e.g., feature, structure, step, or characteristic) described in connection with the embodiment is included in at least one embodiment described herein, and may or may not be present in other embodiments. In addition, it is to be understood that the described elements may be combined in any suitable manner in the various embodiments.

In general, the compositions, methods, and articles can alternatively comprise, consist of, or consist essentially of, any ingredients, steps, or components herein disclosed. The compositions, methods, and articles can additionally, or alternatively, be formulated, conducted, or manufactured so as to be devoid, or substantially free, of any ingredients, steps, or components not necessary to the achievement of the function or objectives of the present claims.

Unless specified to the contrary herein, all test standards are the most recent standard in effect as of the filing date of this application, or, if priority is claimed, the filing date of the earliest priority application in which the test standard appears.

The endpoints of all ranges directed to the same component or property are inclusive of the endpoints, are independently combinable, and include all intermediate points and ranges. For example, ranges of "up to 25 wt%, or 5 to 20 wt%" is inclusive of the endpoints and all intermediate values of the ranges of "5 to 25 wt%," such as 10 to 23 wt%, etc. The notation "$\pm$10%" means that the indicated measurement may be from an amount that is minus 10% to an amount that is plus 10% of the stated value.

The terms "first," "second," and the like, "primary," "secondary," and the like, as used herein do not denote any order, quantity, or importance, but rather are used to distinguish one element from another. The term "combination" is inclusive of blends, mixtures, alloys, reaction products, and the like. Also, "at least one of' means that the list is inclusive of each element individually, as well as combinations of two or more elements of the list, and combinations of at least one element of the list with like elements not named. Unless defined otherwise, technical and scientific terms used herein have the same meaning as is commonly understood by one of skill in the art to which this invention belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art.

Accordingly, the appended claims as filed and as they may be amended are intended to embrace all such alternatives, modifications variations, improvements, and substantial equivalents.

## Claims

**1.** A fiber reinforced composite comprising:

a dynamically crosslinked polymer network comprising a polyester matrix and a plurality of epoxy derived crosslinks;
a transesterification catalyst; and
a fabric layer.

**2.** The composite of Claim 1, wherein the polyester matrix comprises at least one of an aliphatic polyester, a polyalkylene terephthalate (for example, poly(butylene terephthalate), poly(propylene terephthalate), or poly(ethylene terephthalate)), a poly(cyclohexylene dimethylene terephthalate), or a poly(alkylene naphthalate); preferably the polybutylene terephthalate.

**3.** The composite of any one or more of the preceding claims, wherein the plurality of epoxy derived crosslinks are derived from at least one of a glycidyl ether comprising on average at least two epoxy groups or a novolac phenolic resin; preferably, the glycidyl ether comprises bisphenol A diglycidyl ether.

**4.** The composite of any one or more of the preceding claims, wherein the transesterification catalyst comprises at least one of a metal acetylacetonate (preferably the metal comprises at least one of zinc, tin, magnesium, cobalt, calcium, titanium, or zirconium), dibutyltin laurate, tin octanoate, dibutyltin oxide, dioctyltin, dibutyldimethoxytin, tetraphenyltin, tetrabutyl-2,3-dichlorodistannoxane, benzyldimethylamide, benzyltrimethyl ammonium chloride, a rare earth salt of an alkali metal, a rare earth salt of an alkaline earth metal, a salt of a saturated or unsaturated fatty acids and a metal, a metal oxide, a metal alkoxide, a metal alcoholate, a metal hydroxide, a sulfonic acid, a phosphine, or a phosphazene; preferably, the transesterification catalyst comprises zinc(II)acetylacetonate.

**5.** The composite of any one or more of the preceding claims, wherein the composite comprises 0.01 to 25 mol% of the transesterification catalyst, based on the total molar amount of ester moieties in the polyester matrix.

**6.** The composite of any one or more of the preceding claims, wherein the fabric layer comprises at least one of a woven fabric, a unidirectional tape, or a non-woven fabric; wherein the fabric layer optionally comprises a glass fabric.

**7.** The composite of any one or more of the preceding claims, wherein the composite comprises 20 to 70 wt%, or 10 to 50 wt% of the dynamically crosslinked polymer network and 30 to 80 wt%, or 50 to 90 wt% of the fabric layer; both based on the total weight of the composite.

**8.** The composite of any one or more of the preceding claims, wherein the dynamically crosslinked polymer network is derived from a pre-crosslinked polymer composition comprising an epoxy crosslinker, a polyester, and the transesterification catalyst; wherein a mole ratio of the hydroxyl and epoxy groups from the epoxy crosslinker to the ester groups in the polyester is 0.01:100 to 30:100, or 0.1:100 to 10:100, or 1:100 to 5:100.

**9.** A method of making the composite of any one or more of the preceding claims, comprising
coating the fabric layer with a composition comprising a pre-crosslinked polymer composition to form a coated fabric; and
melt impregnating the coated fabric with the pre-crosslinked polymer composition to form a pre-impregnated composite; and
curing the pre-crosslinked polymer composition at a temperature of 50 to 250°C to form the dynamically crosslinked polymer network.

**10.** The method of Claim 9, wherein the coating comprises at least one of scattering, spray coating, dip coating, flood coating, or aqueous impregnation.

**11.** The method of any one of Claims 9 to 10, wherein the melt impregnating comprises translating the fabric layer from a first roll, through a coating station to form the coated fabric, then though a melt impregnation station to form the

pre-crosslinked polymer composition, and ultimately onto a second roll.

**12.** The method of any one of Claims 9 to 11, wherein the coating comprises the scattering and the scattering comprises:

dispensing a powder comprising the pre-crosslinked polymer composition onto a roller comprising a plurality of protrusions;
rotating the roller and allowing the powder to fall onto the fabric layer; and
translating at least one of the roller and the fabric layer in a lateral direction during the dispensing.

**13.** The method of any one of Claims 11 to 12, wherein the fabric layer is supported on a carrier layer during the translating.

**14.** The method of any one of Claims 9 to 13, wherein the curing comprises laminating.

**15.** An article comprising the composite of any one of the preceding claims.

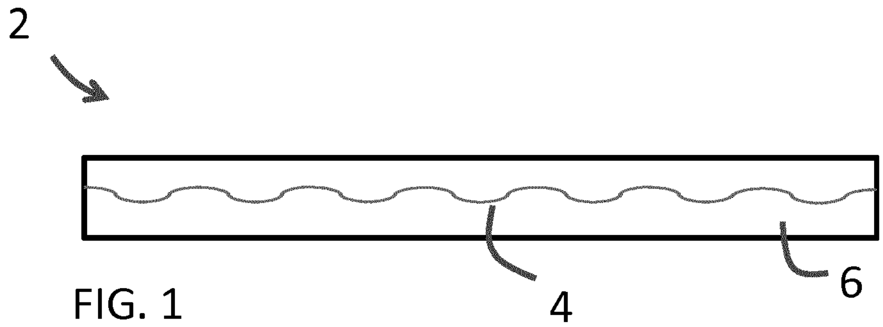


FIG. 1

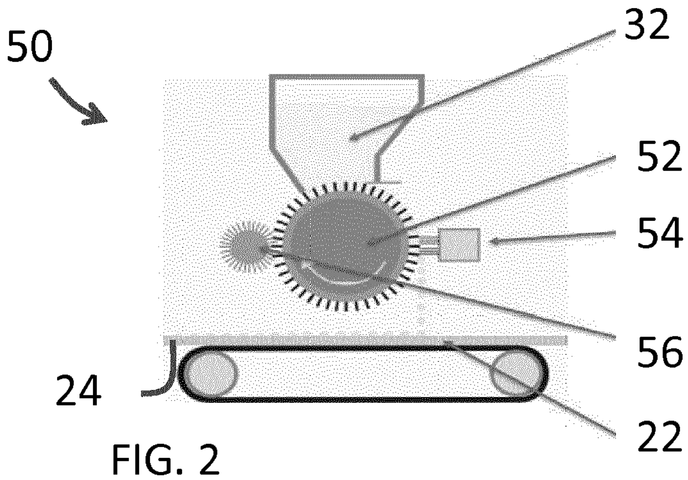


FIG. 2

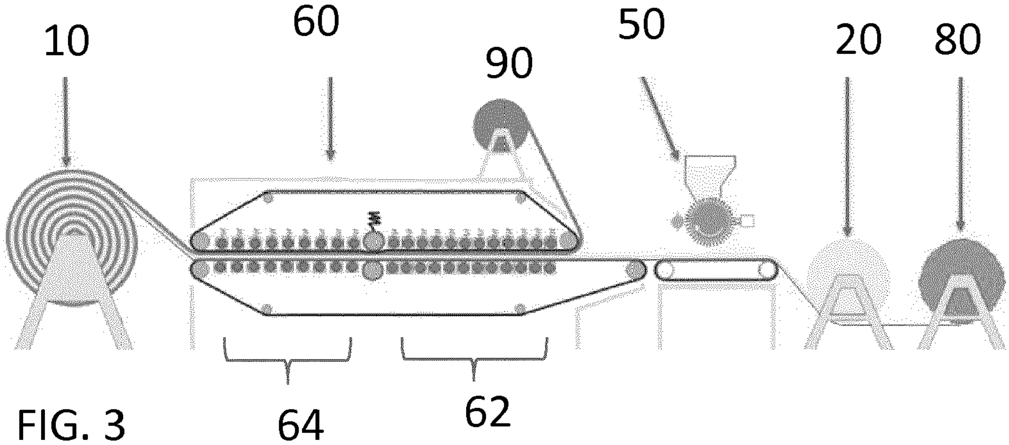


FIG. 3

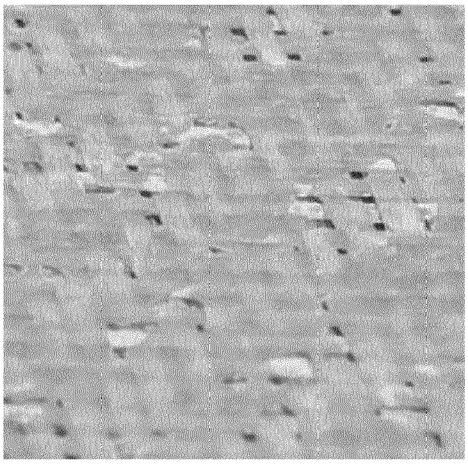

FIG. 4

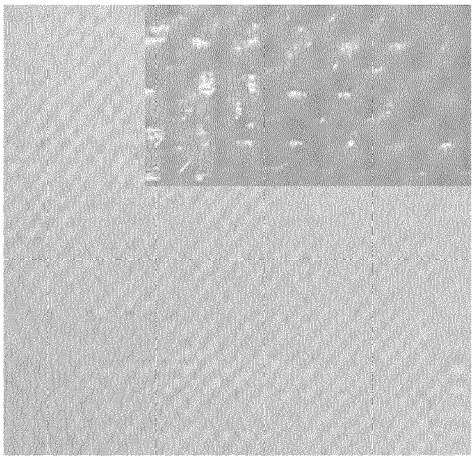

FIG. 5

Europäisches Patentamt
European Patent Office
Office européen des brevets

# EUROPEAN SEARCH REPORT

Application Number
EP 18 17 3363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 2017/218192 A1 (GROOTE RAMON [NL] ET AL) 3 August 2017 (2017-08-03)<br>* paragraphs [0004], [0005], [0035], [0036], [0043], [0055] - [0073], [0088], [0091], [0099], [0102] - [0107]; examples 8-11; tables 9-14 *<br>----- | 1-15 | INV.<br>C08J5/04 |
| Y | SRINIVAS SHENOY HECKADKA ET AL: "Chopped Strand/Plain Weave E-Glass as Reinforcement in Vacuum Bagged Epoxy Composites",<br>JOURNAL OF MATERIALS,<br>vol. 2015, 13 September 2015 (2015-09-13), pages 1-7, XP055525728,<br>US<br>ISSN: 2314-4866, DOI: 10.1155/2015/957043<br>* the whole document *<br>----- | 1-15 | |
| Y | VARGA CS ET AL: "Improving the mechanical properties of glass-fibre-reinforced polyester composites by modification of fibre surface",<br>MATERIALS AND DESIGN, LONDON, GB,<br>vol. 31, no. 1,<br>1 January 2010 (2010-01-01), pages 185-193, XP026573906,<br>ISSN: 0261-3069, DOI: 10.1016/J.MATDES.2009.06.034<br>[retrieved on 2009-06-24]<br>* the whole document *<br>----- | 1-15 | TECHNICAL FIELDS SEARCHED (IPC)<br>C08J<br>C08L<br>C08G |
| Y | -: "Composites"<br>In: "Encyclopedia of Polymer Science and Engineering, volume 3",<br>1 January 1985 (1985-01-01), John Wiley & Sons, New York (US), XP055525725,<br>pages 776-779,<br>* the whole document *<br>----- | 1-15 | |

The present search report has been drawn up for all claims

1

| Place of search | Date of completion of the search | Examiner |
|---|---|---|
| Munich | 21 November 2018 | Okunowski, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 17 3363

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2018

| Patent document cited in search report | Publication date | Patent family member(s) | Publication date |
|---|---|---|---|
| US 2017218192 A1 | 03-08-2017 | CN 106795274 A | 31-05-2017 |
| | | EP 3169717 A1 | 24-05-2017 |
| | | US 2017218192 A1 | 03-08-2017 |
| | | WO 2016009392 A1 | 21-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110319524 A
- US 20170218192 A
- WO 2012152859 A
- WO 2014086974 A
- WO 2018055604 A
- WO 2018055603 A


### Non-patent literature cited in the description


- **KLOXIN ; BOWMAN.** *Chem. Soc. Rev.,* 2013, vol. 42, 7161-7173
- **D. MONTAMAL et al.** *Science,* 2011, vol. 334, 965-968
- **J. P. BRUTMAN et al.** *ACS Macro Lett.,* 2014, vol. 3, 607-610